(19)

**Europäisches Patentamt**

**European Patent Office**

**Office européen des brevets**

(11) **EP 2 911 095 A1**

(12) **EUROPEAN PATENT APPLICATION**

(43) Date of publication:
26.08.2015 Bulletin 2015/35

(51) Int Cl.:
*G06Q 10/00* (2012.01)     *G06Q 10/02* (2012.01)
*G06Q 50/14* (2012.01)

(21) Application number: 14290050.5

(22) Date of filing: 24.02.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Amadeus S.A.A.
06410 Biot (FR)

(72) Inventors:
• Canis, Laure
  06300 Nice (FR)

• Chabod, Alexandre
  06530 Peymeinade (FR)
• Sandamiani, Anais
  06300 Nice (FR)
• Rosso, Jerome
  06130 Grasse (FR)
• Vankalo, Marika
  06220 Vallauris (FR)

(74) Representative: Samson & Partner Patentanwälte mbB
Widenmayerstraße 6
80538 München (DE)

(54) **Automatic auditing system including agency debit memo generation**

(57)     Methods, systems, and computer program products for auditing transactions involving sales of tickets by one business entity for a travel product provided by another business entity. An application receives data including a fare basis and a fare charged for a ticket. A plurality of priceable units each consistent with an itinerary of the ticket and each including a fare corresponding to the fare basis is determined. Combinations of these priceable units that conform to the itinerary are defined, and a fare for each combination determined. The fare of each combination is compared to the fare charged for the ticket, and a matching fare selected. The rules used to price the selected combination are compared to the ticket and pricing context of the ticket, and errors in pricing the ticket determined based thereon. An agency debit memo may be defined based on errors in pricing the ticket and audit discrepancies.

FIG. 1

**Description**

TECHNICAL FIELD

The invention generally relates to computers and computer software, and in particular to methods, systems, and computer program products for auditing transactions related to the sale of travel products.

BACKGROUND

In the travel industry, airline tickets may be sold through an indirect seller, such as a travel agency. The indirect seller will typically check for available flights that satisfy a traveler's travel plans and, once matching flights are found, book flights for the traveler and collect payment. Payment may be collected by the indirect seller acting as a merchant, or with a validating carrier as the merchant.

To ensure that indirect sellers are selling tickets in compliance with restrictions and rules relating to pricing the ticket, these transactions may be audited. An audit may verify whether the amounts of the fare, taxes, and commission match the restrictions and rules in place regarding the details of the ticket. If, for example, the audit indicates that the indirect seller underpriced the product, the validating carrier may be able to recover the shortfall from the indirect seller. Because the annual worldwide revenue of the airline industry is rather large, correcting even small discrepancies in compensation across all sold tickets could result in a significant recovery of otherwise lost revenue. Although typically only tickets sold by an indirect seller are audited, tickets sold by airline offices can also be audited so that accounting can be performed to attribute losses to different entities.

In current auditing systems, an operator reviews transaction data and decides whether to issue a billing document in response to finding a discrepancy between the collected amount and what should have been priced by the indirect seller. The operator's decision is based largely on the operator's experience with auditing other transactions. This typically requires the operator to manually interpret and enter ticket data. If there is a discrepancy, the operator must explain the discrepancy by including a narrative in the billing document (e.g., an Agency Debit Memo (ADM)) detailing what the indirect seller did wrong. This typically requires the operator to perform back-pricing, select the fare with the fare basis chosen by the agent, and read the fare notes for each fare category of the fare to understand which categories were violated to cause the discrepancy.

In the event there were multiple fares involved in the ticket, the operator may have to repeat this process for each fare. These steps must also be performed in the case of exchanges and refunds. In particular, the operator may need to obtain an understanding what the exchange conditions and applicable penalties are by reading the fare notes under category 16 (penalties) for the old ticket. The operator may then use what they have learned by reading the notes to create the billing document. Due to their reliance on operators interpreting and entering such large amounts of data, conventional auditing processes are time consuming and prone to errors.

Thus, improved systems, methods, and computer program products for analyzing transactions and generating audit documents are needed that assist in managing audits, reducing operator costs, and increasing net revenues recovered by the auditing party.

SUMMARY

In an embodiment of the invention, a method of auditing a transaction relating to a ticket sold by a first business entity for a travel product provided by a second business entity is provided. The method includes receiving data defining a fare basis and a first fare charged for the ticket, and determining a plurality of priceable units each consistent with an itinerary of the ticket. Each priceable unit may also include a second fare corresponding to the fare basis. The method may further determine one or more combinations of the priceable units that conform to the itinerary of the ticket. Each of the combinations of priceable units may have a total fare comprising a sum of the second fares of the priceable units in the combination. The first fare may be compared to the total fare for each combination of priceable units, and one of the combinations of priceable units may be selected based at least in part on the comparison of the first fare to each of the total fares. The method may further generate an agency debit memo based at least in part on the selected combination of priceable units.

In another embodiment of the invention, an apparatus for auditing the transaction is provided. The apparatus includes a processor and a memory storing instructions that, when executed by the processor, cause the apparatus to receive the data defining the fare basis and the first fare charged for the ticket, and determine the plurality of priceable units each consistent with the itinerary of the ticket. Each priceable unit may also include the second fare corresponding to the fare basis. The apparatus may further determine one or more combinations of the priceable units that conform to the itinerary of the ticket. Each of the combinations of priceable units may have the total fare that is the sum of the second fares of the priceable units in the combination. The first fare may be compared to the total fare for each combination of priceable units, and one of the combinations of priceable units may be selected based at least in part on the comparison of the first fare to each of the total fares. The apparatus may further generate the agency debit memo based at least in part on the selected combination of priceable units.

In another embodiment of the invention, a computer program product is provided that includes a non-transitory computer readable storage medium including instructions. The instructions may be configured, when executed by the processor, to cause the processor to receive the data defining the fare basis and the first fare charged for the ticket, and determine the plurality of priceable units each consistent with the itinerary of the ticket. Each priceable unit may also include the second fare corresponding to the fare basis. The instructions may further cause the processor to determine one or more combinations of the priceable units that conform to the itinerary of the ticket. Each of the combinations of priceable units may have the total fare that is the sum of the second fares of the priceable units in the combination. The first fare may be compared to the total fare for each combination of priceable units, and one of the combinations of priceable units may be selected based at least in part on the comparison of the first fare to each of the total fares. The instructions may further cause the processor to generate the agency debit memo based at least in part on the selected combination of priceable units.

## BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.

FIG. 1 is a diagrammatic view of an exemplary operating environment including a plurality of computer systems in communication via a network.

FIG. 2 is a diagrammatic view of an exemplary computer system of FIG. 1.

FIG. 3 is a flow chart depicting an audit process that may be executed by one or more of the computer systems in FIG. 1 that includes defining one or more combinations of priceable units and determining a match between one of the combinations and a ticket sold by an indirect seller.

FIG. 4 is a flow chart depicting a matching process that may be used by the audit process of FIG. 3 to determine the match between the combination of priceable units and the ticket.

FIG. 5 is a diagrammatic view of a user interface that may be used to generate an Agency Debit Memo (ADM) based on data generated by the audit process of FIG. 3.

FIG. 6 is a flow chart depicting an audit process that may be executed by one or more of the computer systems in FIG. 1 for a transaction involving an exchange of an old ticket for a new ticket.

FIG.7 is a flow chart depicting an audit process that may be executed by one or more of the computer systems in FIG. 1 for a transaction involving a refund of a ticket.

## DETAILED DESCRIPTION

Embodiments of the invention may be implemented by a computing system, such as a Global Distribution System (GDS). The computing system may provide processing and database functions that facilitate interconnections between indirect sellers of airline tickets and a plurality of computer reservation systems each associated with a travel product provider. In the context of air travel, the computing system may be configured to allow travelers to book airline tickets and other travel products through indirect sales channels. These indirect sales channels may include online travel agencies and/or other business entities selling tickets for services to be provided by a different business entity, such as a carrier. The indirect sellers may receive payment from the travelers for the booked tickets and compensate the carrier for the cost of the service provided out of the received payment, or by having the travelers make a direct payment to the carrier.

The computing system may provide auditing features that enable the travel product provider to audit transactions involving a sale, exchange, or refund of a ticket. Auditing the transactions may allow the travel product provider to determine if they are being properly compensated. To reduce the amount of operator effort required to perform the audit, the system may generate data that enables automatic generation of a billing document, such as an Agency Debit Memo (ADM). To this end, the system may determine a plurality of priceable units that could have been used to satisfy an itinerary of the ticket based on a fare basis selected by the indirect seller, or the ticketed fare basis. One or more combinations of these priceable units may be defined that conform with the itinerary of the ticket. The one or more combinations may then be priced by a fare engine, and the resulting fares compared to the fare charged for the ticket.

The system may also compare one or more ticket and/or pricing context parameters of the ticket to one or more corresponding rules used to price each of the combinations of the priceable units, or the pricing rules. This comparison between the pricing context parameters and the pricing rules may be used to match one or more of the combinations to the ticket. Differences in the amounts of the fare, taxes, and commissions, as well as conflicts between the ticket and pricing context parameters and the pricing rules of the matched combination of priceable units, may be used to determine the cause and amount of any pricing errors. The system may then populate data fields in the ADM based on the errors made by the indirect seller. The processes may be applied to transactions involving first issue sales of tickets, exchanged tickets, returned tickets, or any other suitable transaction.

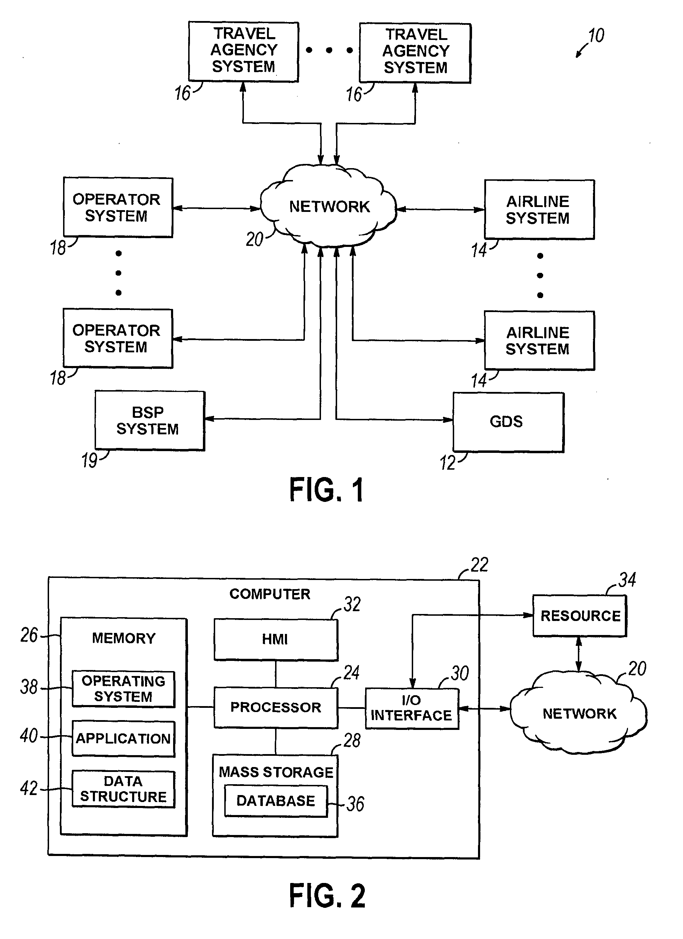

Referring now to FIG. 1, an operating environment 10 in accordance with an embodiment of the invention may include a Global Distribution System (GDS) 12, one or more travel product provider systems, such as airline systems 14, one or more indirect seller systems, such as travel agency systems 16, one or more operator systems 18, and a Billing and Settlement Plan (BSP) system 19. Each of the GDS 12, airline systems 14, travel agency systems 16, operator systems 18, and BSP system 19 may communicate through a network 20. The airline systems 14 may each include a Computer Reservation System (CRS) and/or billing system for the respective airline that enables the GDS 12 and/or travel agency systems 16 to reserve and pay for airline tickets. The airline systems 14 may also interact with each other, either directly or through the GDS 12, to enable a validating carrier to sell tickets for seats provided by the operating carrier. The operating carrier may then bill the validating carrier for the services provided. Billing between business entities acting as indirect sellers and business entities acting as travel product providers may be provided by the BSP system 19. Revenue may also be recovered directly from the indirect sellers (i.e., without use of the BSP), in which case the travel product provider (e.g. validating carrier) may ensure that any issued agency memo are paid. The network 20 may include one or more private and/or public networks (e.g., the Internet) that enable the exchange of data.

The GDS 12 may be configured to facilitate communication between the airline systems 14 and travel agency systems 16 by enabling travel agents, validating carriers, or other indirect sellers to book reservations on one or more airline systems 14 via the GDS 12. To this end, the GDS 12 may maintain links to each of the airline systems 14 via the network 20. These links may allow the GDS 12 to route reservation requests from the airline system 14 of the validating carrier and/or the travel agency system 16 to the corresponding airline system 14 of the operating carrier. The airline and travel agency systems 14, 16 may thereby book flights on multiple airlines via a single connection to the GDS 12. The GDS 12 may store copies of Passenger Name Records (PNRs) generated by the airline systems 14, as well as data defining pricing context parameters and ticket prices associated with booked reservations in one or more searchable databases. This data may allow a PNR to be maintained by the GDS 12 that includes a complete set of flight data for an itinerary including segments from multiple airlines. The stored data may also allow more accurate auditing of transactions involving the sale of tickets by the indirect sellers.

The operator systems 18 may be in communication with the GDS 12 via the network 20 or some other suitable connection, and may provide system operators with a terminal or other suitable interface to the GDS 12. Operators may thereby communicate with the GDS 12 via the operator systems 18 and execute tasks relating to the auditing of transactions. The operators may also execute tasks relating to actions taken to recover discrepancies uncovered by the audits.

The BSP system 19 may be configured to receive data from the ticketing office of the travel agency or validating carrier reporting the sale of the ticket in the name of the operating carrier. In the United States, the Airline Reporting Corporation (ARC) normally provides this service. In any case, the BSP may act as a Business Process Outsourcer (BPO) that provides a clearing house which settles accounts between travel agencies and validating carriers. Other systems (not shown) may also be connected to the network 20 for settling accounts between operating and validating carriers, such as systems operated by the IATA Clearing House (ICH) or Airlines Clearing House (ACH). In any case, these various clearing house systems may facilitate collection of fares by the operating carrier for providing services sold by another business entity.

Referring now to FIG. 2, the GDS 12, airline systems 14, travel agency systems 16, operator systems 18, and BSP system 19 of operating environment 10 may be implemented on one or more computer devices or systems, such as exemplary computer system 22. The computer system 22 may include a processor 24, a memory 26, a mass storage memory device 28, an input/output (I/O) interface 30, and a Human Machine Interface (HMI) 32. The computer system 22 may also be operatively coupled to one or more external resources 34 via the network 20 and/or I/O interface 30. External resources may include, but are not limited to, servers, databases, mass storage devices, peripheral devices, cloud-based network services, or any other suitable computer resource that may used by the computer system 22.

The processor 24 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 26. Memory 26 may include a single memory device or a plurality of memory devices including but not limited to read-only memory (ROM), random access memory (RAM), volatile memory, non-volatile memory, static random access memory (SRAM), dynamic random access memory (DRAM), flash memory, cache memory, or any other device capable of storing information. The mass storage memory device 28 may include data storage devices such as a hard drive, optical drive, tape drive, non-volatile solid state device, or any other device capable of storing information. A database 36 may reside on the mass storage memory device 28, and may be used to collect and organize data used by the various systems and modules described herein.

Processor 24 may operate under the control of an operating system 38 that resides in memory 26. The operating system 38 may manage computer resources so that computer program code embodied as one or more computer software applications, such as an audit application 40 residing in memory 26, may have instructions executed by the processor 24. In an alternative embodiment, the processor 24 may execute the audit application directly, in which case the operating system 38 may be omitted. One or more data structures 42 may also reside in memory 26, and may be used by the processor 24, operating system 38, and/or audit application to store or manipulate data.

The I/O interface 30 may provide a machine interface that operatively couples the processor 24 to other devices and systems, such as the network 20 and/or external resource 34. The audit application 40 may thereby work cooperatively with the network 20 and/or external resource 34 by communicating via the I/O interface 30 to provide the various features, functions, applications, processes, and/or modules comprising embodiments of the invention. The audit application 40 may also have program code that is executed by one or more external resources 34, or otherwise rely on functions and/or signals provided by other system or network components external to the computer system 22. Indeed, given the nearly endless hardware and software configurations possible, persons having ordinary skill in the art will understand that embodiments of the invention may include applications that are located externally to the computer system 22, distributed among multiple computers or other external resources 34, or provided by computing resources (hardware and software) that are provided as a service over the network 20, such as a cloud computing service.

The HMI 32 may be operatively coupled to the processor 24 of computer system 22 in a known manner to allow a user to interact directly with the computer system 22. The HMI 32 may include video and/or alphanumeric displays, a touch screen, a speaker, and any other suitable audio and visual indicators capable of providing information to the user. The HMI 32 may also include input devices and controls such as an alphanumeric keyboard, a pointing device, keypads, pushbuttons, control knobs, microphones, etc., capable of accepting commands or input from the user and transmitting the entered input to the processor 24.

An airline ticket purchased through one of the airline or travel agency systems 14, 16 may involve pricing, booking, and ticketing. The ticket may be priced by the ticketing office with the help of the fare engine. The fare engine may determine a fare for the ticket by calculating the fare for each of the one or more priceable units that satisfy the itinerary of the ticket, and summing these fares.

The fare engine may reside in the GDS 12, and may determine the price for the ticket based on a pricing context comprising the pricing context parameters. The pricing context parameters may define a set of conditions under which the ticket is being priced, or the ticketing conditions. Examples of pricing context parameters may include, but are not limited to, a pricing date, an office code that identifies the ticketing office originating the ticket, a Passenger Type Code that identifies a type of passenger (e.g., infant, child, adult, adult standby, military, etc), a corporate code that identifies a negotiated rate or corporate discount for which the traveler is eligible, and a booking class code that identifies a class of service (e.g., first class, business class, economy class).

Each priceable unit may comprise a combination of one or more segments that comprise a flight between an origination and a destination point served by the carrier. The priceable unit is therefore the simplest combination of segments that can be ticketed. The simplest priceable unit is a one way priceable unit, which may comprise a single segment. Other priceable units may include round trips and circle trips built from two or more segments that form a closed loop. Open jaw priceable units may also be defined, and may resemble a circle trip with one segment missing. The ticketed flight may thereby include the one or more priceable units, with each priceable unit comprising one or more segments.

Each segment may define a flight connecting two cities forming a "market". The segment may thereby define a specific flight that provides one-way travel in the market. Exemplary segments comprising the priceable unit may include, but are not limited to, a non-stop direct flight (e.g., a flight having a single leg connecting the market), a direct flight with a stop-over, and/or a flight that includes one or more connections between multiple legs.

The itinerary of the ticket may define the segments for which the ticket can be used to obtain a boarding pass. Each segment defined by the itinerary may comprise one or more sequential legs, each leg connecting a scheduled departure station to a scheduled arrival station. The market may thereby comprise the first departure station and the last arrival station of the one or more legs of the flight. Thus, each priceable unit may comprise a combination of one or more legs that defines the segment which satisfies at least a portion of the itinerary. The itinerary may thereby drive what combinations of priceable units can be selected for ticketing. Example itineraries may include, but are not limited to: a one-way non-stop direct flight, a one-way direct flight with a stop-over, a one-way flight with one or more connections, a round-trip non-stop direct flight, a round-trip direct flight with a stop-over, and a round-trip flight with one or more connections.

Fares may cover one or more flights that serve the market. A ticket may consist of a single priceable unit in the case of a one-way ticket, or may include more than one priceable unit in the case of a round-trip ticket. A correctly priced ticket may have a fare that was selected to match the pricing context of the ticket. That is, the fare may define one or more pricing rules that must be observed for the ticket to qualify for the fare. The ticket and pricing context may define a plurality of conditions under which the ticket may be booked, with each of the conditions corresponding to one of the pricing context parameters. If the ticketed fare is selected correctly, none of the ticket or pricing context parameters should be in conflict with the pricing rules defined by the ticketed fare.

The fare for each of the priceable units, and thus the ticket, may be determined based at least in part on the pricing rules. The pricing rules may define a booking class, ticket purchasing requirements (e.g., advanced purchase required, refundable, non-refundable, web-only fare, etc.), stay requirements, round-trip requirements, flight origination requirements, connection requirements, seasonal requirements, day of the week requirements, flight restrictions, or any other rule which must be satisfied to qualify for the fare. Typically, there will be a plurality of fare bases that can be used in each market, with each fare basis covering a plurality of possible fares.

By way of example, a round-trip fare for a particular priceable unit may be less expensive than a one-way fare for the priceable unit. Business rules may therefore prohibit the use of round-trip fares for pricing flights in an itinerary including only a single priceable unit. Thus, to satisfy a fare including a round-trip condition, the itinerary may need to include at least two priceable units in the same market to satisfy the round-trip requirement. Round trip fares may also impose a stay restriction, such as a requirement for a Saturday night stay. Thus, the fare including the round trip requirement and the Saturday night stay requirement may require the itinerary to include two priceable units for the market with flight dates separated by a Saturday night.

Booking the ticket may include checking the operating carrier inventory for availability of the flights comprising the ticket. This check may include sending a reservation request from the airline or travel agency system 14, 16 to the GDS 12. The GDS 12 may in turn query a corresponding airline system 14 for flight availability. If a seat is available for the requested flights, the flights may be booked, and the operator carrier inventory decreased to reflect the booking. In response to the traveler approving the transaction, the traveler's account may be billed for the price of the ticket, which may comprise the total fare, taxes, and commission for the priceable units comprising the ticketed flights.

When auditing transactions involving the sale of a ticket by the indirect seller, an audit amount representing the price that should have been charged for the ticket (i.e., the total fare, taxes, and commissions) may be determined by the computing system. The audit amount may be calculated based on the market and fare that should have been used for the ticket, as well as the ticket and pricing context of the ticket. The audit amount may also be broken down into separate audit fare, audit taxes, and audit commissions. Auditing some transactions, such as ticket refunds or exchanges, may also require calculation of an audit penalty. The audit penalty may reflect an amount that should have been assessed as a penalty for exchanging the ticket, and may be used to determine if the indirect seller assessed a correct penalty for the transaction.

Although auditing commonly refers to the process of verifying the pricing of tickets sold by the travel agent on behalf of the validating carrier, and the corresponding billing of the traveler, the same principles can be applied to interline billing associated with a ticket sold by the validating carrier on behalf of the operating carrier. In this case, outward auditing may refer to verification by the operating carrier that the validating carrier has sold the ticket for the right amount, and inward auditing may refer to verification by the validating carrier that the operating carrier has billed the right amount. In the case of outward auditing, the actual price charged by the indirect seller may be compared to the audit amount. For inward audits, the amount billed by the operating carrier may be compared to a prorated amount to which the operating carrier is entitled.

In any case, if a discrepancy exists relative to the audit amount, the auditing party may take steps to recover the discrepancy. These steps may include issuing the ADM from the validating carrier to the ticketing office of the travel agency, the operating carrier issuing an interline bill to the validating carrier (i.e., interline outward billing), or the validating carrier issuing a rejection memo to the operating carrier (i.e., interline inward billing), as the case may be. Other steps that may occur during the process of recovering the discrepancy may include issuing a dispute of the ADM, and issuing an inquiry into the dispute.

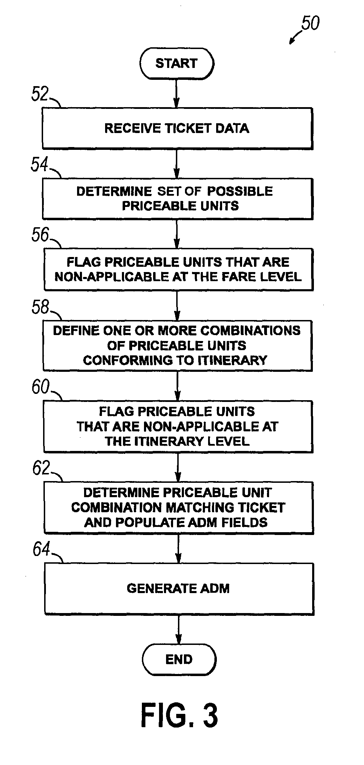

Referring now to FIG. 3, a flow chart is presented that depicts a process 50 which may be executed by the audit application 40 to determine a type of error committed by the indirect seller in pricing the ticket. The process 50 may be executed in response to a determination that the ticketing transaction should be audited. This determination may be made in response to identifying an audit discrepancy V between the price charged for the ticket by the indirect seller and the audit amount. The determination on whether to issue an ADM may also take into consideration the size of the audit discrepancy $V$ and an expected value of issuing and/or continued prosecution of the ADM. Methods, systems, and computer program products for determining the audit discrepancy V and expected value of issuing an ADM are described in more detail in U.S. Patent Application Ser. No. 13/926,136, filed June 25, 2013 and entitled "OPTIMIZING GENERATION OF AGENCY DEBIT MEMOS", Attorney Docket No. AMS-143US, and U.S. Patent Application Ser. No. 14/025,054, filed September 12, 2013 and entitled "AUDITING RULES OPTIMIZER", Attorney Docket No. AMS-152US, the disclosure of each of which is incorporated herein by reference in its entirety for all purposes.

In block 52, the process 50 may receive ticket data. The ticket data may be received, for example, as part of data received at the time of issuance or from transaction reporting files, such as Hand-Off Tape (HOT) or Carrier Accounting Tape (CAT) files. The ticket data may include data identifying the ticketed fare basis used to determine the fare for the ticket (e.g., a fare basis code), data indicating the fare, taxes, and commissions calculated by the indirect seller in pricing the ticket, the itinerary of the ticket, and/or any other suitable parameters. In response to receiving the ticket data, the process 50 may proceed to block 54.

In block 54, the process 50 may determine a set of possible priceable units based on the ticketed fare basis of the ticket being analyzed. To this end, priceable units having fare bases different from the ticketed fare basis may be eliminated, or filtered out of the set of possible priceable units. The set of possible priceable units may comprise one or more priceable units, each including a segment that could be used to satisfy the itinerary of the ticket. That is, the set of priceable units may include any priceable unit having the ticketed fare basis that could have been used to generate a ticket satisfying the itinerary. In an embodiment of the invention, the set of priceable units may include all of the priceable units that could have been used to satisfy the itinerary of the ticket. However, the invention is not so limited, and alternative embodiments of the invention may define sets of priceable units having only a portion of all the possible priceable units. In response to defining the set of possible priceable units, process 50 may proceed to block 56.

In block 56, the process 50 may flag priceable units that are not applicable at the fare level. Non-applicable priceable units may include any priceable unit having a fare with a rule that is violated by the ticket and pricing context of the ticket. That is, non-applicable priceable units may include one or more pricing rules that are in conflict with one or more pricing context parameters of the ticket. Non-applicable priceable units may be identified by comparing the pricing rules of the priceable unit to the ticket and pricing context parameters of the ticket. The non-applicable priceable units may then be flagged with data indicating one or more pricing rules of the priceable unit that are violated by one or more corresponding ticket and pricing context parameters of the ticket. The priceable unit flags may thereby provide an indication of the number and type of rule violations associated with the flagged priceable unit. All pricing context parameters applicable at fare level may be used to flag priceable units that are non-applicable. In response to flagging the priceable units that are non-applicable at the fare level, the process 50 may proceed to block 58.

In block 58, the process 50 may define a set of one or more combinations of priceable units, with each combination consisting of priceable units selected from the set of possible priceable units. Each combination of the set of combinations may be defined so that the combination satisfies the itinerary of the ticket. In an embodiment of the invention, the process may define all possible combinations of priceable units that satisfy the itinerary of the ticket. The priceable units for each combination may be priced by the fare engine and summed to generate the fare for each combination. The process 50 may thereby generate the total fare, or "combination fare" for each combination of priceable units that satisfies the itinerary of the ticket, with each combination having a different combination of pricing units. The process 50 may then proceed to block 60.

In block 60, the process 50 may determine the combinations of priceable units that are non-applicable at the itinerary level. These combinations may be flagged by determining if one or more of the ticket and pricing context parameters violates one or more of the pricing rules of the combinations of priceable units. All pricing rules applicable at the itinerary level may be used to flag priceable units that are non-applicable. The flags may thereby provide an indication of the number and type of rule violations associated with the flagged combination of priceable units at both the fare level and the itinerary level. The process 50 may then proceed to block 62.

In block 62, the process 50 may determine the combination of priceable units that matches the ticket. This determination may be based on: (1) a comparison of the fare charged for the ticket, or "ticket fare" to each of the combination fares, and (2) a number of rule violations for the combination of priceable units. In response to selecting the combination of priceable units that provides the best match to the ticket fare and/or pricing context, the process 50 may automatically populate one or more data fields in the ADM, such as a reason for memo data field, with a narrative describing the reason for the ADM. The reason may be based on a discrepancy between the pricing rules of the matched combination of priceable units and the ticket and/or pricing context of the ticket as indicated by the ticket data. Once the appropriate data fields of the ADM are populated, either automatically by the audit application 40 or manually by the operator, the process 50 may proceed to block 64 and generate the ADM.

Process 50 may be implemented for all audits, or only for audits involving tickets including specific ticket parameters or audited fare bases. This selective application of process 50 may reduce computational overhead by skipping processing of tickets that historically do not produce inaccurate ticket fares. For example, some audited fare bases or ticketing offices may be associated with low rates of inaccurate tickets. In embodiments that selectively apply the process 50, the process 50 may be configured to flag priceable units for certain rule violations, and ignore other rule violations. Priceable units that do not include fares having verified rules may be analyzed using a conventional audit pricing process.

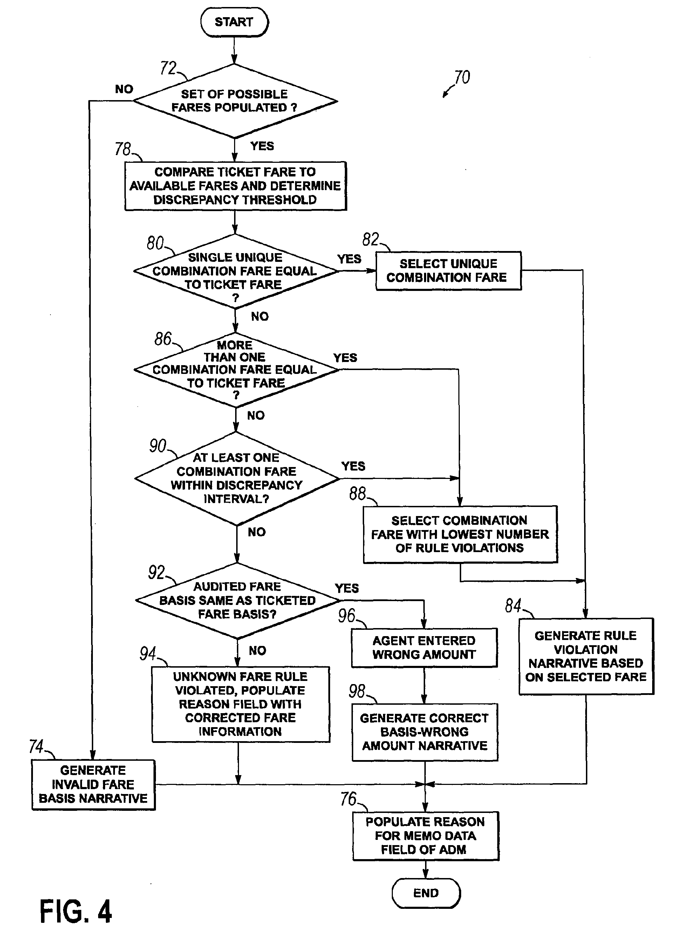

Referring now to FIG. 4, a flow chart is presented that depicts a matching process 70 which may be executed by the audit application 40 to determine the combination of priceable units that matches the ticket in block 62 of process 50. In block 72, the process 70 may determine if the set of combinations of priceable units is populated with any combinations. In response to the set being empty or otherwise not populated ("NO" branch of decision block 72), the process may proceed to block 74. The set of combinations being empty may be an indication that the ticketed fare basis is not a valid fare basis. This could occur, for example, if the fare basis was manipulated by the indirect seller.

In block 74, the process 70 may generate a narrative indicating that the indirect seller has selected an invalid fare basis. This narrative may be one of a plurality of predetermined narratives stored in memory that are used to describe auditing scenarios. By way of example, the process 70 may generate a narrative that recites "An invalid fare basis was used by the indirect seller to price the ticket. The fare should have been priced using fare basis YIF, and the fare calculation line should have been LON 6X SIN4876.23NUC4876.23END ROE0.621791." The process 70 may then proceed to block 76.

In response to the set of combinations of priceable units being populated with at least one combination ("YES" branch of decision block 72), the process 70 may proceed to block 78. In block 78, the process 70 may compare the ticket fare to the combination fare for each combination of priceable units in the set of combinations. The process 70 may also determine a discrepancy threshold. The discrepancy threshold may be configured to take into account currency conversion approximations and/or rounding errors that may cause the fare selected by the indirect seller to differ slightly from the value calculated for the combination fare. For example, the threshold discrepancy may be set to 0.1% of the ticket fare or the combination fare.

The process 70 may then proceed to block 80 and begin determining how many of the combinations of priceable units have combination fares equal to the ticket fare. In response to the ticket fare being equal to only one unique combination fare of the set of combinations of priceable units ("YES" branch of decision block 80), the process 70 may proceed to block 82 and select the unique combination fare as the matching fare before proceeding to block 84. In response to the ticket fare being equal to some number of the combination fares other than one ("NO" branch of decision block 80), the process 70 may proceed to block 86.

In block 86, the process 70 may determine if more than one combination fare is equal to the ticket fare. In response to more than one of the combination fares equaling the ticket fare ("YES" branch of decision block 86), the process 70 may proceed to block 88. In response to the ticket fare not equaling more than one of the combination fares, e.g., if no combinations of priceable units have a total fare equal to the ticket fare ("NO" branch of decision block 86), the process may proceed to block 90.

In block 90, the process 70 may determine if there are any combination fares within the discrepancy threshold of the ticket fare. That is, are there any combination fares that satisfy:

$$Fare_{ticket} - T < Fare_{combination} < Fare_{ticket} + T$$

where $Fare_{ticket}$ is the ticket fare, $Fare_{combination}$ is the combination fare, and T is the discrepancy threshold. $Fare_{ticket} \pm T$ may thereby define a discrepancy interval. In response to no combination fares being within the discrepancy interval ("NO" branch of decision block 90), the process 70 may proceed to block 92. In response to there being at least one combination fare within the discrepancy threshold ("YES" branch of decision block 90), the process 70 may proceed to block 88.

In block 88, the process 70 may select the combination fare flagged with the fewest number of rule violations that is either equal to the ticket fare, or within the discrepancy threshold. This may be determined based on the how the combinations of priceable units, or the priceable units themselves, were flagged in blocks 56 and 60 of process 50. The process 70 may then use the rules for the selected combination of priceable units that were violated by the pricing context to help determine a reason for the audit discrepancy V. The determination of the combination of priceable units having the fewest number of rule violations may be applied in the case of multiple combination fares equaling the ticket fare (i.e., when process 70 enters block 88 from block 86), or in the case of multiple combination fares being within the discrepancy interval (i.e., when process 70 enters block 88 from block 90). The process 70 may then proceed to block 84. If there is only one combination fare within the discrepancy interval, selecting the combination fare with the lowest number of rule violations may be a trivial operation. In this case, the process 70 may simply select the only available combination fare and proceed directly from block 90 to block 84.

In block 84, the process 70 may generate the narrative explaining the reason for the ADM. The narrative may be generated based at least in part on the pricing rules of the matching combination that are violated by the pricing context of the ticket. The narrative may include text that indicates the number and/or type of rules that are violated. In case of more than one pricing rule being violated, the process 70 may include logic that selects one of the violated rules as the primary reason for issuing the ADM, or as the title of the ADM. The narrative may address all violations, or only one or more violations that are determined to be primary or major causes of the audit discrepancy V. By way of example, a rule violation narrative for an ADM could be "The 14 day advance purchase condition was violated. The fare that should have been used to price the ticket is one with fare basis YIF, and the fare calculation line should have been LON 6X SIN4876.23NUC4876.23END ROE0.621791." In response to the process 70 generating the narrative, the process 70 may proceed to block 76.

In block 92, the process 70 may determine if an audited fare basis determined from back-pricing the ticket is the same as the ticketed fare basis. For the process 70 to reach block 92, it may be necessary that none of the combination fares have values in the discrepancy interval. In embodiments of the invention that selectively apply the process 50, this may occur because priceable units having the audited fare basis were left out of the set of possible priceable units. If the audited fare basis is not the same as the ticketed fare basis, ("NO" branch of decision block 92), it may be determined that the audit discrepancy V is due to an unknown fare basis rule violation, and the process 70 may proceed to block 94.

In block 94, the process 70 may generate a narrative with text indicating that an unknown fare basis rule has been violated. The process 70 may also include corrected fare basis information in the narrative based on the audited fare basis. By way of example, the rule violation narrative for an ADM in which the ticketed fare basis violated an unknown fare basis rule could be "The fare should have been priced using fare basis YIF, and the fare calculation line should have been LON 6X SIN4876.23NUC4876.23END ROE0.621791."

If the audited fare basis is the same as the ticketed fare basis, ("YES" branch of decision block 92), the process 70 may proceed to block 96. Reaching block 96 may be an indication that the indirect seller has used manual pricing and entered the ticket fare incorrectly. When using manual pricing, it may be possible to choose a fare that is different from the correct ticket fare for the fare basis. The indirect seller may also have manually changed the fare amount returned by the fare engine. Thus, in block 96 the process 70 may determine that the indirect seller manually entered the wrong amount for the ticket fare. The process may then proceed to block 98.

In block 98, the process 70 may generate a narrative with text indicating that the indirect seller selected a valid fare basis, but entered an incorrect ticket fare amount. By way of example, an incorrect fare narrative for an ADM in which the ticketed fare basis is the same as the audited fare basis could be "The chosen fare basis is correct, but the collected fare amounts are wrong." The process 70 may then proceed to block 76.

In block 76, the process 70 may populate the reason for memo data field of the ADM with the generated narrative. The process 70 may also populate additional data fields of the ADM, such as monetary value fields (e.g., fare price and tax fields), based on the selected combination fare. The explanation entered into the ADM may be based on the rules violated by the ticketed fare basis, and the narrative may include the number and type of rules violated. Certain portions of the ADM may also be populated by the operator, or the operator may edit portions of the ADM that were automatically populated by the process 70.

To this end, the audit application 40 may generate: (1) audit amounts for the fare, taxes, and commissions; (2) a fare basis and fare calculation line of the audited fare; and (3) the audit discrepancy V. The audit discrepancy $V$ may be broken down into individual audit discrepancies between the fare, taxes, and commissions calculated by the audit application 40, and the corresponding fare, tax, and commission amounts collected by the indirect seller. The audit application 40 may use this information to automatically generate portions of the ADM by entering discrepancies and generated narratives in appropriate data fields of the ADM. The reason for memo data field of the ADM may also be populated with narratives that provide a specific reason for a tax discrepancy, a commission discrepancy, and/or a fare discrepancy. In an embodiment of the invention, the audit application 40 may be configured to provide the generated narratives and numerical values to a user interface of an ADM generation application to facilitate generation of ADM's.

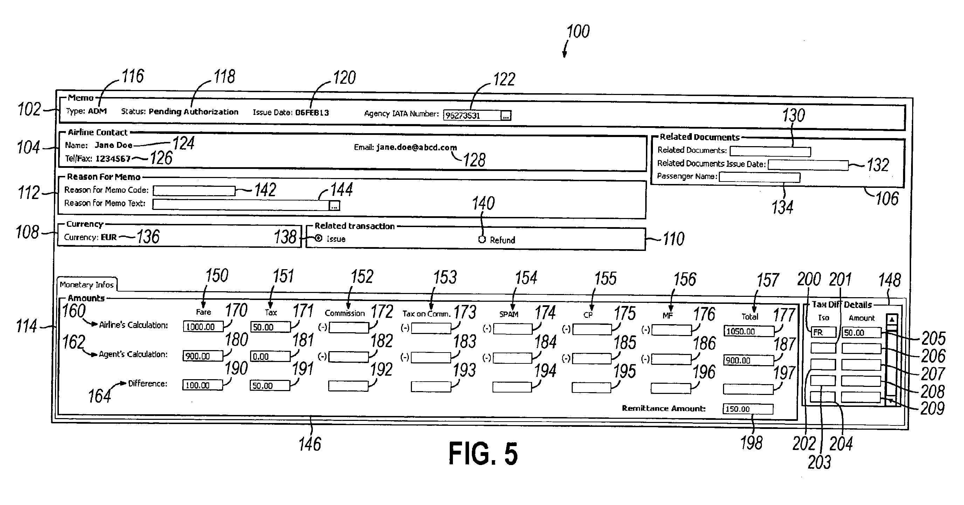

Referring now to FIG. 5, an exemplary user interface 100 for generating the ADM may include a header window 102, an airline contact window 104, a related documents window 106, a currency selection window 108, a related transaction window 110, a reason for memo window 112, and a monetary information window 114. The header window 102 may include fields for entering and/or displaying data, such as a type of memo field 116, a status of the memo field 118, an issue date of the memo field 120, and an agency identifier field 122. The airline contact window 104 may include an operator identification field 124, a phone number field 126, and an e-mail address field 128. The related documents window 106 may include a related document identifier field 130, a related document issue date field 132, and a passenger name field 134. The currency selection window 108 may include a currency data entry field 136 for displaying and/or entering a type of currency in which the transaction is being conducted. The related transaction window 110 may include buttons 138, 140 for selecting the type of transaction that the memo addresses, e.g. issuance of the ticket or a refund.

The reason for memo window 112 may include a reason for memo code field 142, and a reason for memo text field 144. The reason for memo code field 142 may be configured to accept an alpha-numerical code that indicates a general reason for the memo. Exemplary codes may include codes that indicate the agency debit memo was issued in response to a pricing or fare rule error, a booking violation, an administrative mistake, etc. The reason for memo text field 144 may be configured to receive the narrative describing the reason for the memo from the audit application 40. The reason for memo text field 144 may also enable the operator to enter text and/or edit narratives received from the audit application 40. The narrative may provide the indirect seller with more specific reasons why the ADM was issued, and how the audit discrepancy $V$ was determined.

The monetary information window 114 may include numerical entry fields that show amounts calculated by the indirect seller, amounts calculated by the travel product provider (e.g., the airline), and the difference between the two. Thus, comparisons may be performed at a fare level, a tax level, and/or a commission level. To this end, the monetary information window 114 may include an amounts window 146 and a tax details window 148. The amounts window 146 may include a fare column 150, a tax column 151, a commission column 152, a tax on commission column 153, a supplementary commission (SPAM) column 154, a cancellation penalty (CP) column 155, a miscellaneous fees (MF) column 156, and a total column 157. Each of the columns 150-157 may include data fields arranged to define a plurality of rows, including an airline's calculation row 160, an agent's calculation row 162, and a difference row 164, with each row 160, 162, 164 having a data field 170-177, 180-187, 190-197 in each of the respective columns 150-157. The amounts window 146 may also include a remittance data field 198 that displays an amount owed to the travel product provider, which may be equal to the amount in the total difference data field 197. The tax details window may include data fields 200-209 that provide additional details of the origin and amount of the taxes at a tax code level.

The audit application 40 may be configured to automatically populate the fields of the user interface 100 with numerical values and narratives, as the case may be, thereby reducing the operator's burden of data entry. The user interface 100 may thereby provide a mechanism by which the audit application 40 can automatically populate data fields in the ADM, such as the reason for memo data field. Numerical values may be determined based on the received data and audit amounts determined by the audit application 40. Narratives may be provided by selecting predetermined narratives based on results of the analysis of the transaction by the audit application 40. The audit application 40 may also alter portions of predefined narrative templates based on determined reasons for the audit discrepancy V, violated pricing rules, audited fare basis information, and/or numerical values for the various audit discrepancies and determined values.

By way of example, a reason provided for a tax discrepancy may depend on why the discrepancy exists. For example, if some taxes were under-collected, and others were not, a narrative may be selected based on this condition and entered into the reason for memo text field 144. An exemplary narrative in this scenario may be "Some taxes have been under-collected and others over-collected, leading to a total under-collection of $100". If all taxes were under-collected, the selected narrative may specify which taxes were under-collected, and which taxes were not collected. An exemplary narrative in this case may be "Tax 'AB' has been under-collected. Tax'CD' should have been collected, but was not collected." The audit application 40 may populate the tax column 151 with tax values calculated by the airline, the indirect seller, and the difference between the two in respective data fields 171, 181, 191. If available, additional details of the taxes may also be automatically entered in data fields 200-209.

Causes for commission discrepancies may include: (1) a wrong commission percentage being applied; (2) an incorrect fare basis causing the fare to be incorrect; or (3) a combination of a wrong commission and an incorrect fare basis. If the ticket fare is correct, but the commission is not, the audit application 40 may determine that the wrong percentage was applied to calculate the commission. In this case, the audit application 40 may populate the reason for memo text field 144 of the user interface 100 with a narrative that indicates this condition. For example, the narrative may recite "The wrong commission percentage was applied. The correct commission percentage is 3%." The audit application 40 may also populate the commission column 152 with the commissions calculated by the travel product provider, the indirect seller, and the difference between the two in respective data fields 172, 182, 192. Similarly, if the ticket fare is wrong and the correct commission percentage was applied, the narrative may include text such as "The correct commission percentage was applied to an incorrect fare amount, resulting in an incorrect commission." If both the ticket fare and commission percentage are incorrect, the narrative may include text such as "The wrong commission percentage was applied. The correct commission percentage is 3%. The commission percentage was also applied to an incorrect fare amount."

In addition to auditing transactions involving first issue tickets (i.e., transactions where the tickets are sold in exchange for a monetary payment by the traveler), embodiments of the invention may also be used for auditing transactions that involve exchanging or refunding a ticket. One common transaction may involve the traveler exchanging an old ticket for a new ticket. This may occur, for example, if the traveler delays their return from a trip and needs a new return ticket. In this case, the traveler may wish to perform a partial exchange of the old ticket for a new ticket. In a partial exchange, an unused portion of the old ticket may be exchanged for a later flight, or a flight to a different destination. A full exchange may occur when no portion of the old ticket has been used.

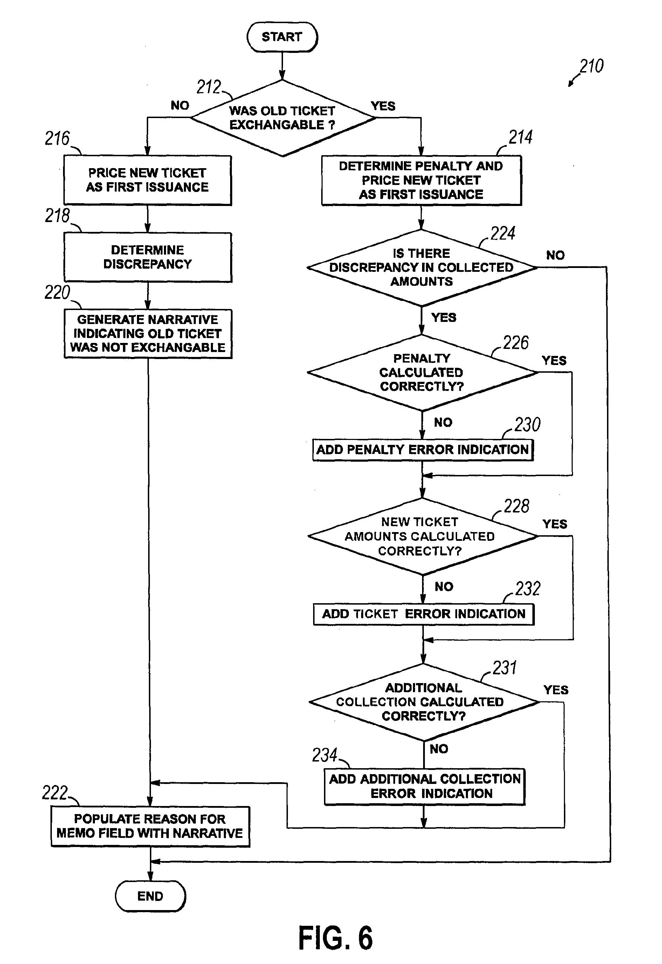

Referring now to FIG. 6, a flow chart is presented that depicts an audit process 210 that may be executed to determine if the indirect seller properly charged for a transaction involving an exchanged ticket. In block 212, the audit process 210 may determine if the old ticket was an exchangeable ticket. In response to the old ticket being exchangeable ("YES" branch of decision block 212), the audit process 210 may proceed to block 214. In response to the old ticket being non-exchangeable ("NO" branch of decision block 212), the audit process 210 may proceed to block 216.

In block 216, the audit process 210 may price a new ticket issued in exchange for the old ticket to determine the audit amount for the new ticket. Because the old ticket was non-exchangeable, the fare for the new ticket should have been priced as a first issuance by the indirect seller. Thus, the audit amount may be equal to the price that should have been charged for the new ticket (e.g., fare + taxes + commissions) as determined independently of the old ticket.

In response to determining the audit amount for the new ticket, the audit process 210 may proceed to block 218 and determine the audit discrepancy V. The audit process 210 may also populate total data field 177 of the airline's calculation row 160 with the audit amount of the new ticket, and the total data field 187 of agent's calculation row 162 with total amount collected by the indirect seller. This total amount collected may equal an amount collected to account for a difference in the price of the old ticket, or "additional amount", and an exchange penalty determined by the indirect seller. If the price of the old ticket is higher than the price of the new ticket, the additional amount may be a "residual amount" that is credited to the traveler or used to offset the exchange penalty. In contrast, if the price of the new ticket is higher than the price of the old ticket, the additional amount may be a "collected amount" to be collected by the indirect seller. The audit process 210 may then populate the remittance data field 198 of difference row 164 with the difference between the amount in the total data field 177 of airline's calculation row 160 and the amount in the total data field 187 of agent's calculation row 162. The audit process 210 may then proceed to block 220.

In block 220, the audit process 210 may generate a narrative indicating that the old ticket was not exchangeable. An exemplary narrative may include text such as "The ticket exchanged was not exchangeable. The amount claimed is the full fare, taxes, and commissions for the new ticket minus the additional collection and assessed exchange penalties." The process may then proceed to block 222.

In block 214, the audit process 210 may determine the exchange penalty that should have been charged for exchanging the old ticket, or the "audit penalty", and the audit amount for the new ticket. The audit amount may be the total price of the fare, taxes, and commission of the new ticket if the new ticket had been issued as a first issuance. The audit process 210 may then proceed to block 224.

In block 224, the audit process 210 may determine the audit discrepancy V as:

$$V = (ADC_{calc} + PENF_{calc} - RV_{calc}) - (ADC_{collected} + PENF_{collected} - RV_{collected})$$

where *ADC* is the additional collection, *PENF* is the exchange penalty, and *RV* is the residual value. In response to the audit discrepancy V being either zero or less than a predetermined amount ("NO" branch of decision block 224), the audit process 210 may determine that nothing is owed, and terminate without generating the ADM. In response to the audit discrepancy V being greater than zero or the predetermined amount, as the case may be ("YES" branch of decision block 224), the audit process 210 may proceed to block 226.

In block 226, the audit process 210 may determine if the exchange penalty was correctly calculated by the indirect seller. This may comprise comparing the audit penalty to the exchange penalty charged by the indirect seller, which may be determined from the received ticket data. If the exchange penalty was correctly calculated by the indirect seller ("YES" branch of decision block 226), the process may proceed to block 228. If the exchange penalty was not correctly calculated by the indirect seller ("NO" branch of decision block 226), the audit process 210 may proceed to block 230.

In block 230, the audit process 210 may add an indication to the narrative that an incorrect exchange penalty was assessed by the indirect seller. For example, the audit process 210 may add text to the narrative that recites "An incorrect exchange penalty was assessed. The correct exchange penalty is $100." The audit process 210 may then proceed to block 228.

In block 228, the audit process 210 may determine whether the correct amounts were calculated by the indirect seller for the fare, taxes, and commissions of the new ticket. This determination may be made by comparing the audit amounts calculated for the fare, taxes, and commissions for the new ticket (e.g., the audit fare, audit taxes, and audit commissions) to the corresponding amounts charged by the indirect seller. For example, the correct amount for the additional amount, or the "audit additional amount", may be the difference between the audit amount of the new ticket and the price charged for the old ticket. Thus, the incorrect additional amount may be due to an incorrect amount being charged for the new ticket (e.g., the charged amount being different than the audit amount for the new ticket), or an incorrect calculation by the indirect seller (e.g., the additional amount being different than the difference between the prices of the new ticket and the old ticket). If the additional amounts were calculated correctly by the indirect seller ("YES" branch of decision block 228), the audit process 210 may proceed to block 231.

If the additional amount was not calculated correctly ("NO" branch of decision block 228), the audit process 210 may proceed to block 232. In block 232, the audit process 210 may add an indication to the narrative that there was an error in calculating the additional amount. This narrative may be selected based on whether the discrepancy is due to a discrepancy between the audit fare, audit taxes, and/or audit commissions and the corresponding fare, taxes, and/or commissions charged by the indirect seller. For example, if there is a discrepancy between the audit fare and the charged fare, the audit process 210 may add text to the narrative such as "The fare for the ticket was incorrect, resulting in an incorrect additional collection." In any case, in response to adding the indication to the narrative, the audit process 210 may proceed to block 231.

In block 231, the audit process 210 may determine if the additional collection was calculated correctly given the fare, taxes, commissions, and/or penalty charged by the indirect seller. That is, the audit process 210 may determine if an incorrect calculation is contributing to the audit discrepancy V. For example, based on the audit amounts and the amounts charged by the indirect seller, the audit process 210 may determine that an error occurred during the calculation of one or more of the additional collection, the exchange penalty, and/or the residual value by the indirect seller. If the calculations for the additional amount were performed correctly given the amounts charged for the ticket ("YES" branch of decision block 231), the audit process 210 may proceed to block 222. If the calculations for the additional amount were not calculated correctly ("NO" branch of decision block 228), the audit process 210 may proceed to block 234.

In block 234, the audit process 210 may add an indication to the narrative that there was a calculation error. The narrative may be selected based on which of the calculations was performed incorrectly. For example, the audit process 210 may add text to the narrative such as "Wrong calculation of additional collection or residual value although the exchange was rightly priced." The audit process 210 may then proceed to block 222.

In block 222, the audit process 210 may populate the reason for memo data field of the ADM with the narrative. This may be accomplished, for example, by inserting the text of the narrative in the reason for memo text field 144 of user interface 100. The operator may thereby have an opportunity to edit the narrative before issuing the ADM, or simply accept the automatically generated reason narrative. In an alternative embodiment of the invention, the narrative may directly added to the ADM without the use of the user interface 100. This may be accomplished, for example, through an Application Programming Interface (API) between the audit application 40 and the ADM generation program, or by the audit application 40 generating the ADM directly.

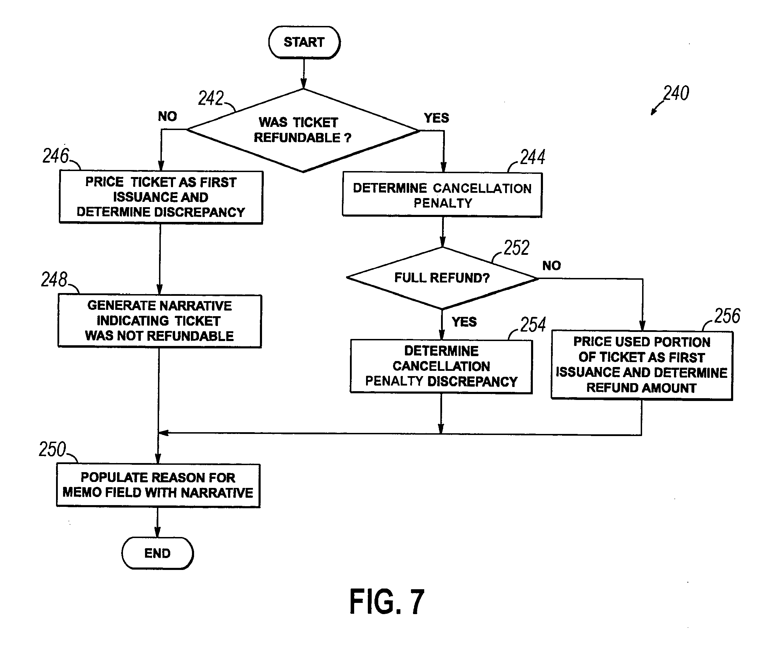

In the event the traveler has a change of plans prior to departure, the traveler may request that the old ticket be accepted in exchange for some form of monetary compensation, or refunded. Similarly as for exchanging the old ticket, refunds may be full in the case of an unused ticket, or partial in the case of a partially used ticket. Referring now to FIG. 7, a flow chart is presented that depicts an audit process 240 that may be executed to determine the if the indirect seller properly refunded the ticket. In block 242, the audit process 240 may determine if the ticket was a refundable ticket. This may be determined, for example, based on the fare basis used to price the ticket. In response to the ticket being refundable ("YES" branch of decision block 242), the audit process 240 may proceed to block 244. In response to the ticket being non-refundable ("NO" branch of decision block 212), the audit process 210 may proceed to block 246.

In block 246, the audit process 240 may determine the audit amount of the ticket as a first issuance and the audit discrepancy $V$. Because the ticket was not refundable, no money should have been refunded. The audit discrepancy V may therefore be equal to the audit amount of the ticket minus the cancellation penalty collected by the indirect seller. If the ticket was only partially refunded because a portion of the ticket had been used, the audit discrepancy V may be equal to the audit amount of the ticket minus a sum of the cancellation penalty collected and the amount retained by the indirect seller for the flown portion of the ticket. The process may then proceed to block 248.

In block 248, the audit process 240 may generate a narrative including text indicating that the ticket was not refundable. For example, the narrative may recite that "The ticket returned was not refundable. The amount claimed is the full fare, taxes, and commissions for the ticket minus the assessed penalty collected." In response to generating the narrative, the audit process 240 may proceed to block 250.

In block 244, the audit process 240 may set the audit penalty equal to the correct cancellation fee for refunding the old ticket. The audit process 240 may then proceed to block 252 and determine if the refund was a full refund. If the ticket was fully refunded ("YES" branch of decision block 252), the audit process 240 may proceed to block 254.

In block 254, the audit process may determine the difference between the audit penalty and the cancellation penalty charged by the indirect seller. This difference may also be viewed as a difference between an audit refund amount (i.e., the price of the ticket minus the audit penalty) and an actual refund amount (i.e., the price of the ticket minus the cancellation penalty charged by the indirect seller). The audit discrepancy $V$ may be equal to this difference. The audit process 240 may populate cancellation penalty field 175 of airline's calculation row 160 with the audit penalty, the cancellation penalty field 185 of agent's calculation row 162 with the cancellation penalty charged by the indirect seller, and the cancellation penalty field 195 of difference row 164 with the audit discrepancy $V$. These values may be duplicated in the respective data fields 177, 187, 197 of the total column 157. The audit process 240 may also generate a narrative indicating that the cancellation penalty was incorrect. For example, the narrative may recite "The cancellation penalty is incorrect. The cancellation penalty should have been $100." As another example, if the cancellation penalty charged was correct, but an incorrect price was used for the original ticket, the narrative may recite "The refunded amount does not correspond to the price of the original ticket." The audit process 240 may then proceed to block 250.

In block 256, the audit process 240 may determine the audit amount for the flown portions of the ticket by pricing the flown priceable units as if they had been sold as a first issuance ticket. The correct refunded amount may then be determined as the difference between the price charged for the full ticket and the audit amount. If the difference is negative (i.e., the audit amount is greater than the original price charged for the ticket) the audit process 240 may set the correct refunded amount to zero. That is, attempting to collect additional money from a traveler for not using the remaining portion of the ticket may be impractical. In this case, the audit discrepancy V may equal the amount refunded by the indirect seller, since no money should have been refunded. The audit process 240 may also populate the data fields 170-177 of airline's calculation row 160 with the corresponding audit values, the data fields 180-187 of agent's calculation row 162 with the corresponding charged values, and the data fields 190-197 of difference row 164 with the corresponding difference values. The audit process 240 may also generate a narrative that includes an indication of whether the cancellation penalty was correct. For example, if the cancellation penalty was not correct, the audit process 240 may generate a narrative that recites "Cancellation penalty was incorrect. The cancellation penalty should have been $100."

In block 250, the audit process 240 may populate the reason for memo data field of the ADM with the narrative. As described above with respect to FIG. 6, this may be accomplished, for example, by inserting the text of the narrative in the reason for memo text field 144 of user interface 100. The operator may thereby have an opportunity to edit the narrative before issuing the ADM, or simply accept the automatically generated reason narrative.

The program code embodying any of the embodiments of the invention described herein is capable of being individually or collectively distributed as a program product in a variety of different forms. In particular, the program code may be distributed using computer readable media, which may include computer readable storage media and communication media. Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures, or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

The methods described herein can be implemented by computer program instructions supplied to the processor of any type of computer to produce a machine with a processor that executes the instructions to implement the functions/acts specified herein. These computer program instructions may also be stored in a computer readable medium that can direct a computer to function in a particular manner. To that end, the computer program instructions may be loaded onto a computer to cause the performance of a series of operational steps and thereby produce a computer implemented process such that the executed instructions provide processes for implementing the functions/acts specified herein.

In addition, program code described herein may be identified based upon the application or software component within which the program code is implemented in a specific embodiment of the invention. However, it should be appreciated that any particular program nomenclature that follows is used merely for convenience, and thus the invention should not be limited to use solely in any specific application identified and/or implied by such nomenclature. It should be further appreciated that the various features, applications, and devices disclosed herein may also be used alone or in any combination. Moreover, given the typically endless number of manners in which computer programs may be organized into routines, procedures, methods, modules, objects, and the like, as well as the various manners in which program functionality may be allocated among various software layers that are resident within a typical computing system (e.g., operating systems, libraries, APIs, applications, applets, etc.), and/or across one or more hardware platforms, it should be appreciated that the invention is not limited to the specific organization and allocation of program functionality described herein.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

While embodiments of the invention have been illustrated by a description of various examples, and while these embodiments have been described in considerable detail, it is not the intention of the applicant to restrict or in any way limit the scope of the appended claims to such detail. Additional advantages and modifications will readily appear to those skilled in the art. The invention in its broader aspects is therefore not limited to the specific details, representative methods, and illustrative examples shown and described. Accordingly, departures may be made from such details without departing from the spirit or scope of applicant's general inventive concept.

**Claims**

1. A method of auditing a transaction, the transaction relating to a first ticket sold by a first business entity for a travel product provided by a second business entity, the method comprising:

   receiving, at a processor, data defining a fare basis and a first fare charged for the first ticket;
   determining, by the processor, a plurality of priceable units each consistent with an itinerary of the first ticket and each including a second fare corresponding to the fare basis;
   determining, by the processor, one or more combinations of the priceable units that conform to the itinerary;
   comparing, by the processor, the first fare to a total fare for each combination of priceable units, the total fare comprising a sum of each second fare of the combination;
   selecting, by the processor, one of the combinations of priceable units based at least in part on the comparison of the first fare to each total fare; and
   generating an agency debit memo based at least in part on the selected combination of priceable units.

2. The method of claim 1 wherein each of the priceable units comprises at least one segment, and each combination comprises one or more of the priceable units.

3. The method of claim 1 or claim 2 wherein selecting one of the combinations based at least in part on the comparison of the first fare to each total fare comprises:

   selecting one of the total fares that matches the first fare; and
   selecting the combination of priceable units having the selected total fare.

4. The method of any of claims 1 to 3 wherein determining the priceable units each consistent with the itinerary of the first ticket comprises:

   determining, by the processor, each priceable unit that is consistent with the itinerary based on the fare basis; and
   determining, by the processor, all possible combinations of the determined priceable units that conform to the itinerary of the first ticket.

5. The method of any of the preceding claims further comprising:

   for each total fare, determining whether the total fare is non-applicable to a pricing context of the first ticket;
   in response to the total fare being non-applicable to the pricing context, flagging the total fare,
   wherein the selected total fare is selected based at least in part on whether the total fare is flagged.

6. The method of claim 5 wherein each total fare is subject to a plurality of rules, and flagging the total fare comprises:

   providing an indication identifying one or more rules of the total fare that are violated by the pricing context.

7. The method of claim 5 or claim 6 further comprising:

   in response to the selected total fare being flagged, generating a narrative based on the one or more identified rules; and
   populating a reason for memo data field of the agency debit memo with the narrative.

8. The method of any of claims 5 to 7 further comprising:

   in response to more than one total fare being within a discrepancy threshold of the first fare, determining a number of violated rules for each of the more than one total fares,
   wherein the selected total fare is selected based at least in part on the number of violated rules of the selected total fare.

9. The method of any of the preceding claims wherein the first ticket was sold by the first business entity in exchange for a returned second ticket having a third fare by collecting an additional amount, and further comprising:

   determining, by the processor, an audit fare for the first ticket;

determining, by the processor, whether the second ticket was exchangeable;

in response to the second ticket not being exchangeable, determining a first discrepancy as the audit fare minus the additional amount; and

in response to the second ticket being exchangeable, determining an audit penalty for the exchange, an audit additional amount, and a second discrepancy.

**10.** The method of claim 9 wherein:

the audit additional amount is determined by summing the audit fare and the audit penalty, and subtracting the third fare from the sum, and

the second discrepancy comprises a difference between the audit additional amount and the additional amount collected by the first business entity.

**11.** The method of claim 9 or claim 10 further comprising:

in response to the second ticket not being exchangeable, generating a first narrative that includes a first indication that the second ticket was not exchangeable and a first explanation of how the first discrepancy was determined;

in response to the second ticket being exchangeable, generating a second narrative that includes a second indication that the second ticket was exchangeable and a second explanation of how the second discrepancy was determined; and

populating a reason for memo data field of the agency debit memo with the first narrative or the second narrative.

**12.** The method of any of claims 1 to 8 wherein the first ticket was refunded for a refund amount, and further comprising:

determining, by the processor, whether the first ticket was refundable;

in response to the first ticket not being refundable, determining, by the processor, a first discrepancy equal to the refund amount;

in response to the first ticket being refundable and being fully refunded, determining, by the processor, an audit penalty, an audit refund amount, and a second discrepancy, the audit refund amount comprising the first fare minus the audit penalty, and the second discrepancy comprising the refund amount minus the audit refund amount; and

in response to the first ticket being refundable and being partially refunded, determining, by the processor, a residual amount, the audit penalty, the audit refund amount, and the second discrepancy, the residual amount comprising the first fare minus an audit fare of a flown portion of the first ticket, the audit refund amount comprising the residual amount minus the audit penalty, and the second discrepancy comprising the refund amount minus the audit refund amount.

**13.** An apparatus for auditing a transaction, the transaction relating to a first ticket sold by a first business entity for a travel product provided by a second business entity, the apparatus comprising:

a processor; and

a memory including instructions that, when executed by the processor, cause the apparatus to:

receive data defining a fare basis and a first fare charged for the first ticket;

determine a plurality of priceable units each consistent with an itinerary of the first ticket and each including a second fare corresponding to the fare basis;

determine one or more combinations of the priceable units that conform to the itinerary;

compare the first fare to a total fare for each combination of priceable units, the total fare comprising a sum of each second fare of the combination of priceable units;

select one of the combinations based at least in part on the comparison of the first fare to each total fare; and

generate an agency debit memo based at least in part on the selected combination of priceable units.

**14.** The apparatus of claim 13 wherein the instructions further cause the apparatus to perform the methods of any of claims 2 to 12.

**15.** A computer program product comprising:

a non-transitory computer readable storage medium; and

instructions stored on the non-transitory computer readable storage medium that, when executed by a processor, cause the processor to:

receive data defining a fare basis and a first fare charged for a ticket;

determine a plurality of priceable units each consistent with an itinerary of the ticket and each including a second fare corresponding to the fare basis;

determine one or more combinations of the priceable units that conform to the itinerary;

compare the first fare to a total fare for each combination of priceable units, the total fare comprising a sum of each second fare of the combination;

select one of the combinations of priceable units based at least in part on the comparison of the first fare to each total fare; and

generate an agency debit memo based at least in part on the selected combination of priceable units.

**FIG. 1**

**FIG. 2**

FIG. 3

START

72 — SET OF POSSIBLE FARES POPULATED ?

NO

70

YES

78 — COMPARE TICKET FARE TO AVAILABLE FARES AND DETERMINE DISCREPANCY THRESHOLD

80 — SINGLE UNIQUE COMBINATION FARE EQUAL TO TICKET FARE ?

YES → 82 — SELECT UNIQUE COMBINATION FARE

NO

86 — MORE THAN ONE COMBINATION FARE EQUAL TO TICKET FARE ?

YES

NO

90 — AT LEAST ONE COMBINATION FARE WITHIN DISCREPANCY INTERVAL?

YES

88 — SELECT COMBINATION FARE WITH LOWEST NUMBER OF RULE VIOLATIONS

NO

92 — AUDITED FARE BASIS SAME AS TICKETED FARE BASIS?

YES

96 — AGENT ENTERED WRONG AMOUNT

84 — GENERATE RULE VIOLATION NARRATIVE BASED ON SELECTED FARE

NO

94 — UNKNOWN FARE RULE VIOLATED, POPULATE REASON FIELD WITH CORRECTED FARE INFORMATION

98 — GENERATE CORRECT BASIS-WRONG AMOUNT NARRATIVE

74 — GENERATE INVALID FARE BASIS NARRATIVE

76 — POPULATE REASON FOR MEMO DATA FIELD OF ADM

END

# FIG. 4

19

**FIG. 5**

START

*210*

*212* — WAS OLD TICKET EXCHANGABLE ?
NO ← → YES

*216* — PRICE NEW TICKET AS FIRST ISSUANCE

*214* — DETERMINE PENALTY AND PRICE NEW TICKET AS FIRST ISSUANCE

*218* — DETERMINE DISCREPANCY

*224* — IS THERE DISCREPANCY IN COLLECTED AMOUNTS — NO

*220* — GENERATE NARRATIVE INDICATING OLD TICKET WAS NOT EXCHANGABLE

YES

*226* — PENALTY CALCULATED CORRECTLY? — YES

NO

*230* — ADD PENALTY ERROR INDICATION

*228* — NEW TICKET AMOUNTS CALCULATED CORRECTLY? — YES

NO

*232* — ADD TICKET ERROR INDICATION

*231* — ADDITIONAL COLLECTION CALCULATED CORRECTLY? — YES

*234* — NO

ADD ADDITIONAL COLLECTION ERROR INDICATION

*222* — POPULATE REASON FOR MEMO FIELD WITH NARRATIVE

END

FIG. 6

FIG. 7

EP 2 911 095 A1

Europäisches
Patentamt

European
Patent Office

Office européen
des brevets

# EUROPEAN SEARCH REPORT

Application Number

EP 14 29 0050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/239442 A1 (MORTAGNE GUILLAUME [FR] ET AL) 20 September 2012 (2012-09-20) * paragraph [0027] - paragraph [0061]; figures * | 1-15 | INV. G06Q10/00 G06Q10/02 G06Q50/14 |

-----

TECHNICAL FIELDS
SEARCHED      (IPC)

G06Q

The present search report has been drawn up for all claims

| Place of search | Date of completion of the search | Examiner |
|---|---|---|
| Munich | 9 May 2014 | Blackley, William |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                         
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 29 0050

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2014

| Patent document cited in search report | Publication date | Patent family member(s) | Publication date |
|---|---|---|---|
| US 2012239442 A1 | 20-09-2012 | AU 2012230579 A1 | 02-05-2013 |
| | | CA 2824373 A1 | 27-09-2012 |
| | | CN 103384890 A | 06-11-2013 |
| | | EP 2500849 A1 | 19-09-2012 |
| | | KR 20140012703 A | 03-02-2014 |
| | | SG 192158 A1 | 30-08-2013 |
| | | US 2012239442 A1 | 20-09-2012 |
| | | WO 2012126747 A1 | 27-09-2012 |

EPO FORM P0459

For more details about this annex : see Official Journal of the European Patent Office, No. 12/82

**REFERENCES CITED IN THE DESCRIPTION**

**Patent documents cited in the description**

- US 92613613 A

- US 02505413 A